# EUROPEAN PATENT APPLICATION

(11) **EP 0 735 477 A1**
(43) Date of publication of application: **02.10.1996**
(21) Application number: 96104554.9
(22) Date of filing: 22.03.1996
(51) Int. Cl.: G06F 11/00

(54) **Method and system for a real-time error-date-base management**

(30) Priority: 31.03.1995 IT MI950646
(71) Applicant: ALCATEL N.V., NL-2288 BH Rijswijk (NL); ALCATEL ITALIA S.p.A., I-20158 Milano (IT)
(72) Inventor: Galletti, Nomo, 20070 Vizzolo Predabissi (MI) (IT); Castano, Carlo, 20030 Senago (MI) (IT)
(74) Representative: Pohl, Herbert, Dipl.-Ing

(57) **Abstract**

Dynamic error management method and a built-in system on an equipment generating errors, to collect (1), store (2a) and retrieve (2b) events originating from different cooperating equipment modules, enabling on-line equipment monitor in order to allow an Operator to react quickly to faulty events. The method enable a dynamic real-time error management of unknown quantity and unknown family, originated run-time from different cooperating modules by using a flexible data structure. Said data structure is implemented as a hybrid n-ary tree and is built up with a tree-root and pointers to n subtrees, one for each error family, where each subtree has has a node descriptor including information about the error type and pointers to the first and to the last nodes, in order to enable a dynamic insertion and retrieval of an unknown number of errors of unknown family.

## Description

The present invention relates to a dynamic error management method and a built-in system in an equipment generating run-time errors, for storing and retrieving events and particularly errors of unknown quantity and family.

A well known on-line error management method for telephone switching equipment is to use visual/acoustic alarm panels. However, the aforesaid method is more orientated to signalling than to error logging.

An off-line error management method available is described in ALCATEL user manual "ATOM 3.0.7 - Monitoraggio allarmi centrali SISTEMA 12 - Manuale Utente - PCS 3 - Ed. 6/2/95" included in "ALCATEL Face - Sistemi di Gestione CEM -Pacchetti su PC - 3CP 01001 0004 PCAYF - Edizione 5 - Febbraio 1995" for telephone switching equipment collects errors, when generated, in the equipment hard disk, and only later provides a data analysis by using an external equipment (generally a PC). However errors are collected roughly, with no auxiliary information for later analysis and processing phases. The off-line filtering phase usually takes a long time to retrieve useful information.

In view of the increasing system architecture complexity, an efficient method to collect, store and retrieve events originating from different cooperating equipment modules is required. In particular, a more dynamic error management method enabling Operators to monitor an equipment on-line is needed, in order to allow a quick reaction to faulty events.

This problem is solved by the teaching of claims 1,2 and 6.

With the present invention a method and a built-in system on an error-generating equipment is provided, for a dynamic real-time error data-base management to store and retrieve run-time errors of unknown quantity and unknown family, which originate from different cooperating modules of an equipment with a complex architecture.

A further object of the invention is to provide a hybrid n-ary tree shaped data structure used to store errors.

Further advantageous features of the invention are claimed in claims 3 to 5. A characteristic feature of the present invention is a timer activation in an initialization phase to drive the event collection in a circular array according to an observation time window mechanism. Futhermore a roll-back mechanism guarantees coherency and consistency after each update phase of said flexible data structure, by keeping pointers to data before an update operation and restoring the previous situation in case of update failure.

The above mentioned and other objects and features of the invention will become more apparent and the invention itself will be best understood by referring to the following description of an embodiment taken in conjunction with the accompaning drawings, in which:
Fig 1 shows an example of a hardware architecture which can be used to carry out the method according to the invention;
Fig 2 shows a software architecture including cooperating modules implementing the method according to the invention,
Fig 3 shows the circular array used to implement the observation time window mechanism driving the event collection phase, and
Fig 4 shows an example of the data structure according to the invention, used to store collected errors.

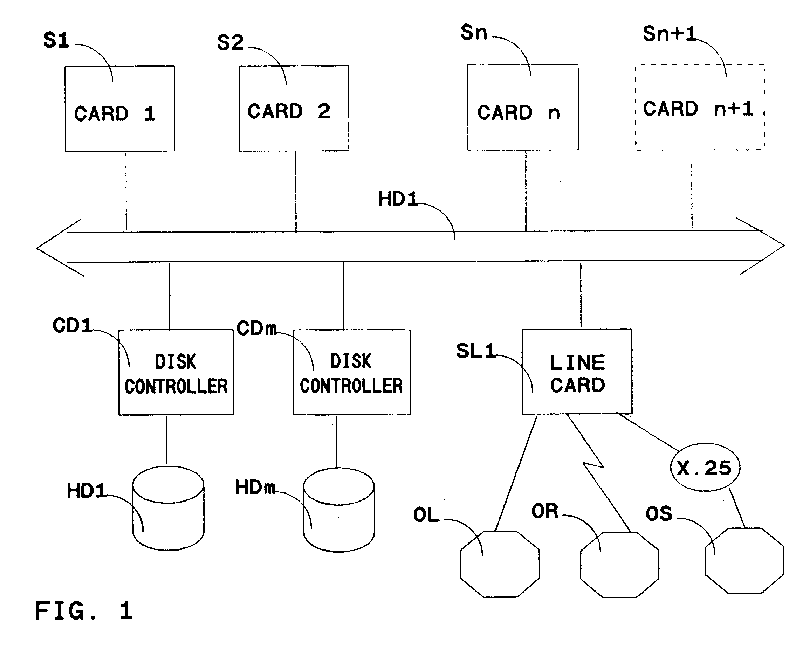

The hardware architecture of an event-generating equipment X on which an error management system implementing the claimed method may be integrated is shown in fig. 1 and includes a bus B to which different hardware modules are connected. As an example the different hardware modules may be:
- n cards S1, S2 ... Sn including microprocessors, memories and others, generating heterogeneous events, of unknown number, family, gravity (errors, warning, information etc.) and characteristics;
- m hard disk controller cards CD1 ... Cdm, each controlling one of the equipment hard disks HD1..HDm;
- at least one line card SL to enable operators to connect to the equipment in order to monitor and manage the system, in one way, for example:
   - OL is connected directly,
   - OR is connected through an asynchronous line,
   - OS is connected through an X.25 network;

Another hardware architecture which can carry out the invention may be based on hardware module cards S1..Sn connected using a Digital Switching Network instead of an hardware bus.

In this case the generated events are dispatched through the network by means of autoaddressing messages.

It is possible to flexibly insert a new module generating its own events of unknown type, by allowing it to define its own rules; further coded information useful for analysis may be associated with events. The new module is registered in the error management system and is immediately monitorable on-line by the system and under the operator control.

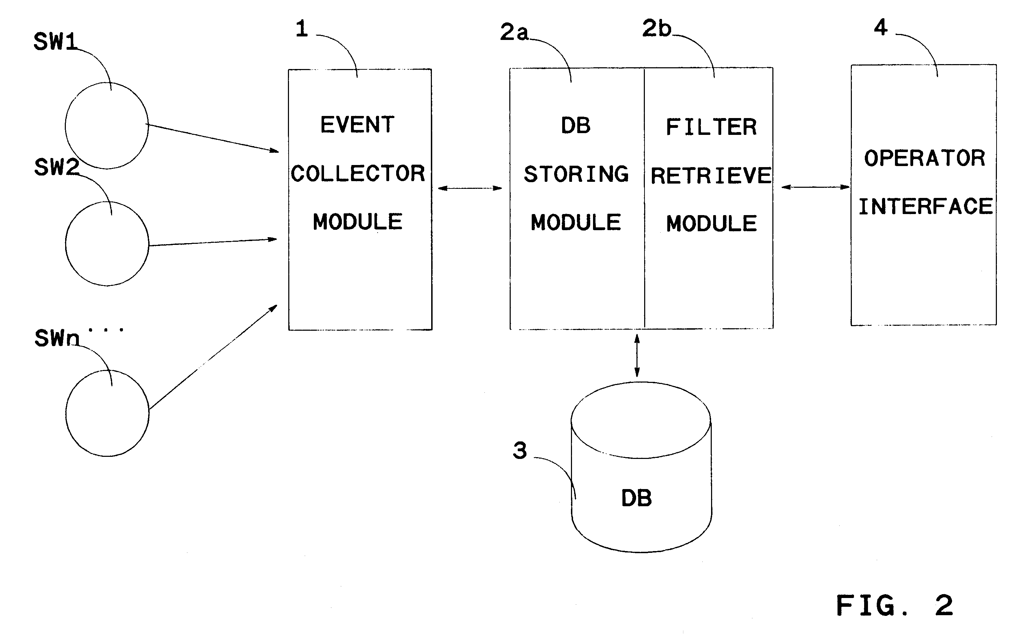

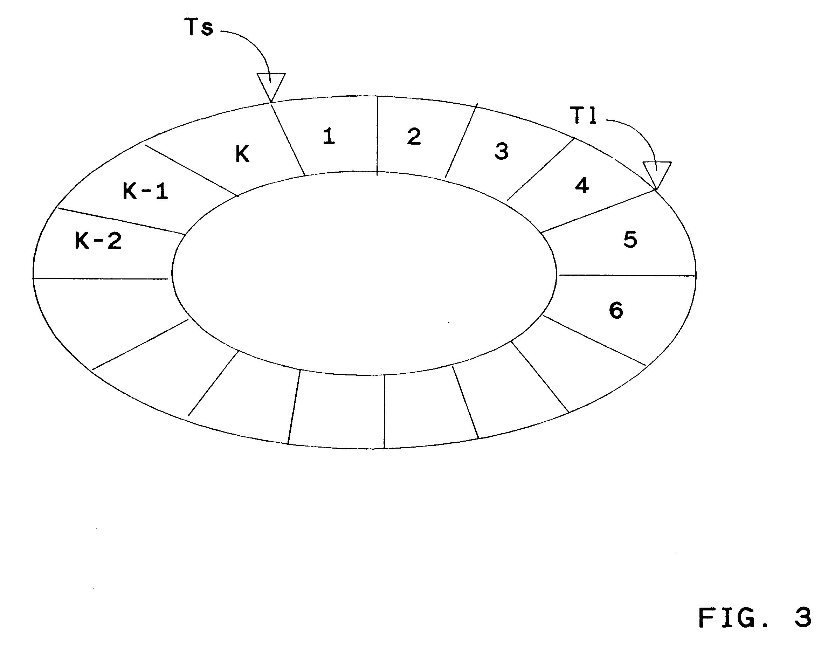

In the previously described hardware architecture, the invention may be carried out as described in the following. A software architecture including cooperating modules implementing the method according to the invention is shown in fig. 2. Events generated by different cooperating modules SW1 ... Swn executed by using the hardware resources present on the equipment cards (S1..Sn in fig 1), are processed by the method according to the invention: events are collected by an Event Collecter Module 1, which is executed by one microprocessor on one installed card (for ex. S1), and are stored in a temporary data structure, described more precisely with reference to fig. 3; errors, a subset of collected events, are then stored on a Data Base 3 by the DB Storing Module 2a; errors are available to further retrieve operation by the Filter Retrieve Module 2b as required from an Operator Interface 4.

The claimed method enables a flexible insertion of new cards Sn + 1 generating new events, on an equipment with a built-in system implementing said method, by defining the new errors format according to a previously arranged format; by only doing that the new generated errors will be managed and monitored on-line instantaneously.

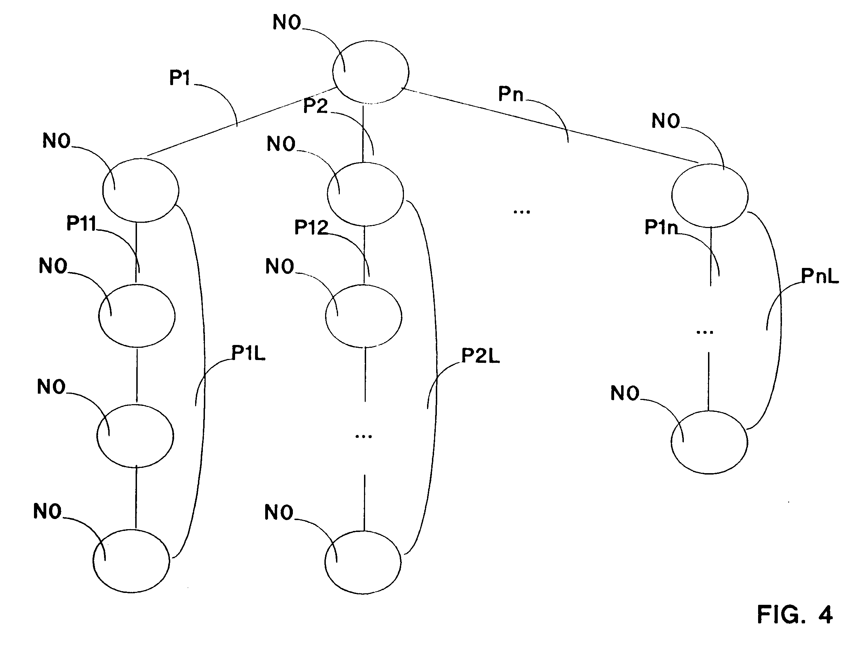

The method according to the invention includes the following steps:
- collecting events from different cooperating modules SW1..SWn and storing events in the temporary data structure, implemented as shown in fig. 3;
- storing errors on a flexible data structure, according to claim 2, as shown in fig. 4, retrieving such errors by using filters, and
- tuning event collection during run-time by modifying configuration parameters (as example thresholds, priorities, etc.).

The various steps of the claimed method will appear better from the following description of a non-limiting example.

Generated events may be of different gravity (errors, warning, information), related for example to failed or aborted operation, lack of reception of predeterminate messages, timer expiry etc. The more relevant errors, as configured, are stored per family, where a family defines the error type and class.

As far as the event collection phase is concerned, events are collected from different cooperating modules and pointers to data relevant to collected events are stored in the temporary data structure which may be a circular array as shown in fig. 3, used to implement the observation time window mechanism driving the event collection phase. In detail, for each collected event an area in RAM memory is allocated and a pointer to that area is stored in the next slot of the circular array. Said circular array is filled in by the Event Collecter Module 1 and read by the Storing Module 2a. Two different indexes are used: a writing index Ts and a reading index Tl. Event collection timing may be carried out by a configured timer, activated at an initialization phase. Said observation time window mechanism is cyclic and subdivided in K time-slots where the number and the lenght (expressed in minutes) is configurable.

Events are then read from the temporary data structure and a subset (errors) are stored in the flexible data structure, by the Storing Module 2a.

The flexible data structure, shown in fig. 4, used to store collected errors, is a hybrid n-ary tree-shaped data structure as it follows:
- a tree-root N0 (block 0) including general management information and pointers to n lists, one for each error family. The stored management information include pointers P1..Pn to the first free block in a log file which will be later described, number of total inserted blocks, maximum number of blocks insertable and others. A copy of the tree-root is maintained in RAM memory in order to reduce the disk accesses;
- n lists having a node descriptor N1..Nn including information about the error type, error parameter definition, pointers P11..P1n to the first and pointers P1L..PnL to the last node in that list;
- all nodes inserted in aforesaid lists, containing error data and pointer to the next node in that list.

This structure enables to easy insert, retrieve and delete different errors of different family with different characteristics. Another example of said flexible data structure could be as it follows:
- a tree-root,
- n binary subtrees having a node descriptor as sub-root including pointers to the first and pointers to the last node in that subtree,
- all nodes inserted as a leaf in one of the aforesaid subtrees, wherein the inserted element is compared with the subroot and then with the left node (when the inserted element is lower) or with the right node (when greater) till the leaf is reached and inserted there.

Data read from the temporary data structure are stored in the flexible data structure, related to the observation period and to the error family to which they belong, as it follows. At the data structure start-up phase, the root is created in the hard disk and a copy is created in RAM memory and later kept updated. When the first error is stored, the first sublist is created and built up with the family descriptor node N1, including the pointer P11 to the first node and the pointer P1L to the last node (which, in this case is the same node). When a new error is stored, a check is made to verify whether said error belongs to one of the existing families or not. If the error belongs to one of the existing families, a new node is created including the error data, inserted in its family list and all the management information and pointers are updated. If the family is not present, a new family descriptor and associated list is created and a new node is created including the error data, inserted in the new family list and all the management information and pointers are updated.

The data structure may be implemented in a file, in one of the monitored equipment hard disk HD1..HDm (see fig. 1), each node may be implemented as a record and each pointer could be a field of the record.

Besides a timer may be activated to drive a periodic reinitialization phase of the flexible data structure, according to a flag defining the mode, for example: cyclic, the flexible data structure is (logically) deleted, the root is maintained and the pointers are reset; not cyclic, a new file is opened and a new copy of said flexible data structure is created for each observation time period.

Furthermore a roll-back mechanism guarantees the coherency and consistency after each update phase of said flexible data structure, by keeping pointers to data before update operation and restoring the previous situation in case of update failure.

The Operator is allowed to make a query by using filters and error data is retrieved efficiently from the flexible data structure.

Moreover the Operator is given the opportunity to tune the event collection, for example to identify in a defined observation period a faulty event among a huge amount of events of minor gravity (information, warning etc.). The event collection may be tuned on needed basis, depending on the output of a query about previously logged events.

Although the present invention has been described specifically in reference to preferred embodiments thereof, it should be understood that changes may be made by those persons skilled in the art within the spirit and scope of the invention as recited in the appended claims.

## Claims

1. A method for a dynamic real-time error data-base management to store and retrieve run-time errors of unknown quantity and unknown family, comprising the following steps:
- collecting events and storing events in a temporary data structure,
- storing errors in a flexible data structure,
- retrieving such errors by using filters, and
- tuning event collection during run-time by modifying configuration parameters

2. A hybrid n-ary tree shaped data structure to store and retrieve run-time errors of unknown quantity and unknown family, built up with a tree- root including general management information and pointers to n subtrees, one for each error family, where each subtree has a node descriptor including information about the data type and pointers to the first and to the last node inserted for each error in that sub-tree.

3. A method as claimed in claim 1, wherein the flexible data structure is a hybrid n-ary tree-shaped data structure built up according to claim 2 where the tree-root (N0) includes general management information and pointers to n lists (P1..Pn), one for each error family, where each list has a node descriptor (N1..Nn) including information about the error type, pointers (P11..P1n) to the first and pointers (P1L..PnL) to the last inserted node

4. A method as claimed in claim 3 wherein, according to an observation time window mechanism, a timer is activated in an initialization phase to drive the event collection in a circular array

5. A method as claimed in claim 3, wherein a roll-back mechanism guarantees coherency and consistency after each update phase of said flexible data structure, by keeping pointers to data before an update operation and restoring the previous situation in case of update failure

6. An error management real-time system, built-in in equipment generating run-time errors of unknown quantity and unknown family, which implements the method as claimed in one of aforesaid claims.
